(19) Europäisches Patentamt
European Patent Office
Office européen des brevets

(11) **EP 4 137 307 B1**

(12) **EUROPEAN PATENT SPECIFICATION**

(45) Date of publication and mention
of the grant of the patent:
**20.08.2025 Bulletin 2025/34**

(21) Application number: **21788849.4**

(22) Date of filing: **09.04.2021**

(51) International Patent Classification (IPC):
**B32B 5/18** (2006.01)     **C08F 265/04** (2006.01)
**H01M 50/403** (2021.01)     **H01M 50/42** (2021.01)
**H01M 50/423** (2021.01)     **H01M 50/434** (2021.01)
**H01M 50/443** (2021.01)

(52) Cooperative Patent Classification (CPC):
(C-Sets available)
**C08F 265/06; C09D 151/06; H01M 10/0525;
H01M 50/403; H01M 50/409; H01M 50/414;
H01M 50/417; H01M 50/42; H01M 50/423;
H01M 50/434; H01M 50/443; H01M 50/446;
H01M 50/449; H01M 50/451; H01M 50/457;**
(Cont.)

(86) International application number:
**PCT/JP2021/014980**

(87) International publication number:
**WO 2021/210499 (21.10.2021 Gazette 2021/42)**

(54) **INGREDIENT FOR SECONDARY CELL SEPARATOR COATING MATERIAL, SECONDARY CELL SEPARATOR COATING MATERIAL, SECONDARY CELL SEPARATOR, METHOD FOR PRODUCING SECONDARY CELL SEPARATOR, AND SECONDARY CELL**

INHALTSSTOFF FÜR BESCHICHTUNGSMATERIAL FÜR SEKUNDÄRZELLSEPARATOR, BESCHICHTUNGSMATERIAL FÜR SEKUNDÄRZELLSEPARATOR, SEKUNDÄRZELLSEPARATOR, VERFAHREN ZUR HERSTELLUNG EINES SEKUNDÄRZELLSEPARATORS UND SEKUNDÄRZELLE

INGRÉDIENT POUR MATÉRIAU DE REVÊTEMENT DE SÉPARATEUR DE CELLULES SECONDAIRES, MATÉRIAU DE REVÊTEMENT DE SÉPARATEUR DE CELLULES SECONDAIRES, SÉPARATEUR DE CELLULES SECONDAIRES, MÉTHODE DE PRODUCTION DE SÉPARATEUR DE CELLULES SECONDAIRES ET CELLULE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2020 JP 2020074278**

(43) Date of publication of application:
**22.02.2023 Bulletin 2023/08**

(73) Proprietor: **Mitsui Chemicals, Inc.
Tokyo 104-0028 (JP)**

(72) Inventors:
• **TOMITA, Yoshihiko**
  **Sodegaura-shi, Chiba 299-0265 (JP)**
• **MATSUMOTO, Tsuyoshi**
  **Sodegaura-shi, Chiba 299-0265 (JP)**
• **KAGAWA, Yasuyuki**
  **Sodegaura-shi, Chiba 299-0265 (JP)**
• **YOSHIMURA, Toshihiro**
  **Sodegaura-shi, Chiba 299-0265 (JP)**

(74) Representative: **Hoffmann Eitle
Patent- und Rechtsanwälte PartmbB
Arabellastraße 30
81925 München (DE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
WO-A1-2013/018887   JP-A- 2015 088 253
JP-A- 2016 072 117   JP-A- 2016 107 642
JP-A- 2019 179 698   JP-A- 2020 087 591
US-A1- 2016 141 581   US-A1- 2020 006 733

(52) Cooperative Patent Classification (CPC): (Cont.)
H01M 50/46; H01M 50/489; H01M 50/491;
Y02E 60/10

C-Sets
C08F 265/06, C08F 220/56, C08F 220/06

**Description**

TECHNICAL FIELD

The present invention relates to an ingredient for a secondary cell separator coating material, a secondary cell separator coating material, a secondary cell separator, a method for producing a secondary cell separator, and a secondary cell.

BACKGROUND ART

Conventionally, a secondary cell is equipped with a separator for separating a positive electrode from a negative electrode, and allowing ions in an electrolytic solution to pass through.

As such a separator, for example, a polyolefin porous film has been known, and it has been also known that various functional layers are provided on the surface of the separator.

As the functional layer formed in the separator, for example, a coating layer obtained by coating a composition for a functional layer containing alumina and a resin on a polyethylene separator substrate to be dried has been known. As such a composition for a functional layer, a mixture of a water-soluble polymer obtained by polymerizing acrylamide, methacrylic acid, and dimethylacrylamide; a particulate polymer obtained by polymerizing n-butylacrylate, methacrylic acid, acrylonitrile, N-methylolacrylamide, and allyl glycidyl ether; alumina; a dispersant; and a surfactant has been proposed (ref: for example, Patent Document 1 (Example 1)).

In US 2016/141581 A1, an adhesive for a lithium ion secondary battery is described. The adhesive includes a particulate polymer, having a core-shell structure. The core portion is formed from a polymer having a swelling degree in an electrolytic solution of 5 times or more and 30 times or less, and the shell portion is formed from a polymer having a swelling degree in an electrolytic solution of more than 1 time and 4 times or less.

Citation List

Patent Document

Patent Document 1: International Patent Publication No. WO 2017/026095

SUMMARY OF THE INVENTION

PROBLEM TO BE SOLVED BY THE INVENTION

On the other hand, since a short circuit may occur between the positive electrode and the negative electrode when the separator changes its shape due to shrinkage by heat, heat resistance is required for the separator. However, there is a problem that the above-described functional layer does not have sufficient heat resistance.

Further, since the separator for a secondary cell needs to allow ions to pass through for power generation, air permeability is required. However, there is a problem that the above-described functional layer decreases the air permeability of the separator.

In addition, the functional layer is further required to improve adhesiveness to the separator, and further, excellent electrolytic solution resistance is required from the viewpoint of suppressing ignition of the secondary cell.

The present invention provides an ingredient for a secondary cell separator coating material which is capable of obtaining a secondary cell separator having both excellent heat resistance and excellent air permeability, and further, also having excellent adhesiveness and electrolytic solution resistance; a secondary cell separator coating material including the ingredient for a secondary cell separator coating material; a secondary cell separator including a coating film of the secondary cell separator coating material; a method for producing a secondary cell separator; and a secondary cell including the secondary cell separator.

MEANS FOR SOLVING THE PROBLEM

The present invention [1] includes an ingredient for a secondary cell separator coating material including a core shell particle including a core layer containing a first polymer and a shell layer covering the first polymer and containing a second polymer, wherein the first polymer has a repeating unit derived from alkyl (meth)acrylate; the second polymer has a repeating unit derived from (meth)acrylamide and a repeating unit derived from a carboxy group-containing vinyl monomer; a content ratio of the repeating unit derived from the (meth)acrylamide is 40% by mass or more and 97% by mass or less, and a content ratio of the repeating unit derived from the carboxy group-containing vinyl monomer is 3% by mass or more and 60% by mass or less with respect to the total amount of the second polymer; and a ratio (second polymer/first polymer) of the mass of the second polymer to the mass of the first polymer is 4 or more and 250 or less.

The present invention [2] includes the ingredient for a secondary cell separator coating material described in the above-described [1], wherein a volume average particle size ($D_{50}$) of the core shell particle is 0.4 $\mu$m or more and 2.0 $\mu$m or less.

The present invention [3] includes a secondary cell separator coating material including the ingredient for a secondary cell separator coating material described in the above-described [1] or [2].

The present invention [4] includes the secondary cell separator coating material described in the above-described [3] further including an inorganic filler and a dispersant.

The present invention [5] includes a secondary cell separator including a porous film and a coating film of the secondary cell separator coating material described in the above-described [3] or [4] disposed on at least one surface of the porous film.

The present invention [6] includes a method for producing a secondary cell separator including a step of preparing a porous film and a step of coating the secondary cell separator coating material described in the above-described [3] or [4] onto at least one surface of the porous film.

The present invention [7] includes a secondary cell including a positive electrode, a negative electrode, and the secondary cell separator according to [5] disposed between the positive electrode and the negative electrode.

EFFECT OF THE INVENTION

The ingredient for a secondary cell separator coating material of the present invention includes the core shell particles including the core layer containing the first polymer, and the shell layer covering the first polymer and containing the second polymer, and the first polymer has the repeating unit derived from the alkyl (meth)acrylate. Further, the second polymer has the repeating unit derived from the (meth)acrylamide and the repeating unit derived from the carboxy group-containing vinyl monomer at a predetermined ratio. Then, the ratio (the second polymer/the first polymer) of the mass of the second polymer to the mass of the first polymer is adjusted within a predetermined range.

Therefore, according to the ingredient for a secondary cell separator coating material of the present invention, it is possible to obtain a secondary cell separator having excellent heat resistance and air permeability, and further, also having excellent adhesiveness and electrolytic solution resistance.

Since the secondary cell separator coating material of the present invention includes the above-described ingredient for a secondary cell separator coating material, it is possible to obtain a secondary cell separator having excellent heat resistance and air permeability, and further, also having excellent adhesiveness and electrolytic solution resistance.

Since the secondary cell separator of the present invention includes a coating film of the above-described secondary cell separator coating material, it has excellent heat resistance and air permeability, and further, also has excellent adhesiveness and electrolytic solution resistance.

According to the method for producing a secondary cell separator of the present invention, it is possible to efficiently produce a secondary cell separator having excellent heat resistance and air permeability, and further, also having excellent adhesiveness and electrolytic solution resistance.

Since the secondary cell of the present invention includes the above-described secondary cell separator, it has excellent heat resistance and air permeability, and further, also has excellent adhesiveness and electrolytic solution resistance. As a result, the secondary cell of the present invention has excellent durability and power generation efficiency.

DESCRIPTION OF EMBODIMENTS

An ingredient for a secondary cell separator coating material of the present invention includes a core shell particle including a core layer containing a first polymer, and a shell layer covering the first polymer and containing a second polymer. Preferably, the ingredient for a secondary cell separator coating material includes a core shell particle including a core layer consisting of a first polymer and a shell layer consisting of a second polymer covering the first polymer.

The first polymer is a polymer obtained by polymerizing a raw material of the first polymer (monomer composition).

The raw material of the first polymer contains, as an essential component, alkyl (meth)acrylate. (Meth)acrylic includes acrylic and methacrylic (hereinafter, the same).

Examples of the alkyl (meth)acrylate include alkyl (meth)acrylates having an alkyl portion having 1 to 12 carbon atoms such as alkyl (meth)acrylates having an alkyl portion having 1 to 4 carbon atoms such as methyl (meth)acrylate, ethyl (meth)acrylate, isopropyl (meth)acrylate, n-butyl (meth)acrylate, isobutyl (meth)acrylate, and t-butyl (meth)acrylate and alkyl (meth)acrylates having an alkyl portion having 5 to 12 carbon atoms such as n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, and octadecyl (meth)acrylate. Preferably, an alkyl (meth)acrylate having an alkyl portion having 1 to 4 carbon atoms is used, more preferably, n-butyl acrylate is used.

Further, the raw material of the first polymer may contain, as an optional component, a copolymerizable monomer which is copolymerizable with alkyl (meth)acrylate (hereinafter, referred to as a first copolymerizable monomer).

Examples of the first copolymerizable monomer include functional group-containing vinyl monomers.

Examples of the functional group-containing vinyl monomer include carboxy group-containing vinyl monomers, hydroxyl group-containing vinyl monomers, amino group-containing vinyl monomers, glycidyl group-containing vinyl monomers, cyano group-containing vinyl monomers, sulfonic acid group-containing vinyl monomers and a salt thereof, acetoacetoxy group-containing vinyl monomers, and phosphoric acid group-containing compounds.

Examples of the carboxy group-containing vinyl monomer include monocarboxylic acid such as (meth)acrylic acid, and dicarboxylic acid such as itaconic acid, maleic acid, fumaric acid, itaconic anhydride, maleic anhydride, and fumaric anhydride or a salt of these.

Examples of the hydroxyl group-containing vinyl monomer include 2-hydroxyethyl (meth)acrylate and 2-hydroxypropyl (meth)acrylate.

Examples of the amino group-containing vinyl monomer include 2-aminoethyl (meth)acrylate, 2-(N-methylamino)ethyl (meth)acrylate, and 2-(N,N-dimethylamino)ethyl (meth)acrylate.

An example of the glycidyl group-containing vinyl monomer includes glycidyl (meth)acrylate.

An example of the cyano group-containing vinyl monomer includes (meth)acrylonitrile.

Examples of the sulfonic acid group-containing vinyl monomer include allylsulfonate, methallylsulfonate, and acrylamide t-butylsulfonate. Further, examples of the salt of the above-described sulfonic acid group-containing vinyl monomer include alkali metal salts such as sodium salt and potassium salt, and ammonium salts. Specific examples thereof include sodium allylsulfonate, sodium methallylsulfonate, and ammonium methallylsulfonate.

An example of the acetoacetoxy group-containing vinyl monomer includes acetoacetoxyethyl (meth)acrylate.

An example of the phosphoric acid group-containing compound includes 2-methacryloyloxyethyl acid phosphate.

These functional group-containing vinyl monomers may be used alone or in combination of two or more.

As the functional group-containing vinyl monomer, preferably, a carboxy group-containing vinyl monomer is used.

Examples of the first copolymerizable monomer include vinyl esters, aromatic vinyl monomers, unsaturated carboxylic acid amides, heterocyclic vinyl compounds, vinylidene halide compounds, $\alpha$-olefins, dienes, and cross-linking vinyl monomers.

Examples of the vinyl esters include vinyl acetate and vinyl propionate.

Examples of the aromatic vinyl monomer include styrene, $\alpha$-methylstyrene, p-methylstyrene, vinyltoluene, and chlorostyrene.

Examples of the unsaturated carboxylic acid amide include (meth)acrylamide and N-methylol (meth)acrylamide.

An example of the heterocyclic vinyl compound includes vinylpyrrolidone.

Examples of the vinylidene halide compound include vinylidene chloride and vinylidene fluoride.

Examples of the $\alpha$-olefins include ethylene and propylene.

An example of the dienes includes butadiene.

Examples of the cross-linking vinyl monomer include vinyl monomers having two or more vinyl groups such as methylenebis(meth)acrylamide, divinylbenzene, polyethylene glycol chain-containing di(meth)acrylate, trimethylolpropane tetraacrylate, pentaerythritol triacrylate, and pentaerythritol tetraacrylate.

These first copolymerizable monomers may be used alone or in combination of two or more.

The first copolymerizable monomer is preferably selected so that a glass transition temperature of the first polymer is adjusted within a range to be described later.

As the first copolymerizable monomer, preferably, a functional group-containing vinyl monomer and an aromatic vinyl monomer are used, more preferably, a carboxy group-containing vinyl monomer, an unsaturated carboxylic acid amide, and an aromatic vinyl monomer are used.

Also, the raw material of the first polymer is preferably substantially free of a cyano group-containing vinyl monomer (specifically, (meth)acrylonitrile).

Being substantially free of the cyano group-containing vinyl monomer means that a ratio of the cyano group-containing vinyl monomer is, for example, 2.0% by mass or less, preferably 1.0% by mass or less with respect to the raw material of the first polymer.

When the cyano group-containing vinyl monomer is blended, electrolytic solution resistance of a secondary cell separator coating material (described later) may decrease. Therefore, the raw material of the first polymer is preferably free of the cyano group-containing vinyl monomer.

In the raw material of the first polymer, a content ratio of the alkyl (meth)acrylate is, for example, 20 parts by mass or more, preferably 30 parts by mass or more, and for example, 100 parts by mass or less, preferably 90 parts by mass or less, more preferably 80 parts by mass or less, further more preferably 70 parts by mass or less with respect to 100 parts by mass of the raw material of the first polymer from the viewpoint of obtaining a secondary cell separator having excellent adhesiveness and electrolytic solution resistance.

Further, a content ratio (total amount) of the first copolymerizable monomer is, for example, 0 parts by mass or more, preferably 10 parts by mass or more, more preferably 20 parts by mass or more, further more preferably 30 parts by mass or more, and for example, 70 parts by mass or less with respect to 100 parts by mass of the raw material of the first polymer.

In other words, the raw material of the first polymer may be a composition consisting of alkyl (meth)acrylate without containing a first copolymerizable monomer, or may be a composition consisting of alkyl (meth)acrylate and a first copolymerizable monomer.

Preferably, the raw material of the first polymer is a composition consisting of alkyl (meth)acrylate and a first copolymerizable monomer, more preferably, a composition consisting of alkyl (meth)acrylate, an aromatic vinyl monomer, and a functional group-containing vinyl monomer, further more preferably, a composition consisting of alkyl (meth) acrylate, an aromatic vinyl monomer, a carboxy group-containing vinyl monomer and/or an unsaturated carboxylic acid amide, particularly preferably, a composition consisting of alkyl (meth)acrylate, an aromatic vinyl monomer, a carboxy group-containing vinyl monomer, and an unsaturated carboxylic acid amide.

In addition, when the first copolymerizable monomer contains the carboxy group-containing vinyl monomer, a content ratio of the carboxy group-containing vinyl monomer is, for example, 0.01 parts by mass or more, preferably 0.1 parts by mass or more, more preferably 0.2 parts by mass or more, further more preferably 0.3 parts by mass or more, and for example, 10 parts by mass or less, preferably 5 parts by mass or less, more preferably 1.0 part by mass or less with respect to 100 parts by mass of the raw material of the first polymer from the viewpoint of obtaining a secondary cell separator having excellent air permeability, and further, also having excellent adhesiveness.

In addition, when the first copolymerizable monomer contains the unsaturated carboxylic acid amide, a content ratio of the unsaturated carboxylic acid amide is, for example, 0.1 parts by mass or more, preferably 1 part by mass or more, more preferably 2 parts by mass or more, and for example, 10 parts by mass or less, preferably 8 parts by mass or less with respect to 100 parts by mass of the raw material of the first polymer from the viewpoint of obtaining a secondary cell separator having excellent heat resistance and air permeability, and further, also having excellent electrolytic solution resistance.

In addition, when the first copolymerizable monomer contains the aromatic vinyl monomer, a content ratio of the aromatic vinyl monomer is, for example, 0.01 parts by mass or more, preferably 10 parts by mass or more, more preferably 20 parts by mass or more, further more preferably 30 parts by mass or more, and for example, 60 parts by mass or less, preferably 50 parts by mass or less, more preferably 45 parts by mass or less with respect to 100 parts by mass of the raw material of the first polymer from the viewpoint of obtaining a secondary cell separator having excellent adhesiveness and electrolytic solution resistance.

Then, the first polymer is a polymer obtained by polymerizing the above-described raw material of the first polymer by a method to be described later.

The first polymer thus obtained relatively has hydrophobicity with respect to the second polymer.

A content ratio of the repeating unit derived from the alkyl (meth)acrylate in the first polymer is the same as the content ratio of the alkyl (meth)acrylate in the raw material of the first polymer.

In other words, the content ratio of the repeating unit derived from the alkyl (meth)acrylate is, for example, 20% by mass or more, preferably 40% by mass or more, and for example, 100% by mass or less, preferably 90% by mass or less, more preferably 80% by mass or less, further more preferably 70% by mass or less with respect to the total amount of the first polymer from the viewpoint of obtaining a secondary cell separator having excellent adhesiveness and electrolytic solution resistance.

Further, a content ratio of the repeating unit derived from the first copolymerizable monomer in the first polymer is the same as the content ratio of the first copolymerizable monomer in the raw material of the first polymer.

In other words, the content ratio of the repeating unit derived from the first copolymerizable monomer is, for example, 0% by mass or more, preferably 10% by mass or more, more preferably 20% by mass or more, further more preferably 30% by mass or more, and for example, 70% by mass or less with respect to the total amount of the first polymer.

In addition, when the first copolymerizable monomer contains the carboxy group-containing vinyl monomer, a content ratio of the repeating unit derived from the carboxy group-containing vinyl monomer is, for example, 0.01% by mass or more, preferably 0.1% by mass or more, more preferably 0.2% by mass or more, further more preferably 0.3% by mass or more, and for example, 10% by mass or less, preferably 5% by mass or less, more preferably 1.0% by mass or less with respect to the total amount of the first polymer from the viewpoint of obtaining a secondary cell separator having excellent air permeability, and further, also having excellent adhesiveness.

In addition, when the first copolymerizable monomer contains the unsaturated carboxylic acid amide, a content ratio of the repeating unit derived from the unsaturated carboxylic acid amide is, for example, 0.1% by mass or more, preferably 1% by mass or more, more preferably 2% by mass or more, and for example, 10% by mass or less, preferably 8% by mass or less with respect to the total amount of the first polymer from the viewpoint of obtaining a secondary cell separator having excellent heat resistance and air permeability, and further, also having excellent electrolytic solution resistance.

In addition, when the first copolymerizable monomer contains the aromatic vinyl monomer, a content ratio of the repeating unit derived from the aromatic vinyl monomer is, for example, 0.01% by mass or more, preferably 10% by mass or more, more preferably 20% by mass or more, further more preferably 30% by mass or more, and for example, 60% by mass or less, preferably 50% by mass or less, more preferably 45% by mass or less with respect to the total amount of the first polymer from the viewpoint of obtaining a secondary cell separator having excellent adhesiveness and electrolytic solution resistance.

Further, a glass transition temperature of the first polymer is, for example, -30°C or more, preferably -20°C or more, more preferably -10°C or more, and for example, 40°C or less, preferably 20°C or less, more preferably 15°C or less from the viewpoint of obtaining a secondary cell separator having excellent air permeability, and further, also having excellent adhesiveness and electrolytic solution resistance.

When the glass transition temperature of the first polymer is excessively low, a decrease in the air permeability of the separator may be caused, and further, surface tackiness may occur, resulting in a decrease in handleability. In addition, when the glass transition temperature of the first polymer is excessively high, adhesion of the core shell particles to the separator may decrease.

The glass transition temperature is calculated by a formula of FOX (hereinafter, the same).

The second polymer is a polymer obtained by polymerizing a raw material of the second polymer (monomer composition).

The raw material of the second polymer contains, as an essential component, (meth)acrylamide and a carboxy group-containing vinyl monomer. Preferably, the raw material of the second polymer does not contain the above-described alkyl (meth)acrylate, and contains (meth)acrylamide and a carboxy group-containing vinyl monomer.

Examples of the (meth)acrylamide include acrylamide and methacrylamide, and preferably, methacrylamide is used.

The carboxy group-containing vinyl monomer is a copolymerizable monomer which is copolymerizable with the (meth)acrylamide and contains a carboxy group.

Examples of the carboxy group-containing vinyl monomer include the above-described monocarboxylic acid, the above-described dicarboxylic acid, or a salt of these.

These carboxy group-containing vinyl monomers may be used alone or in combination of two or more.

When the raw material of the second polymer contains the carboxy group-containing vinyl monomer, a secondary cell separator (described later) obtained by using a secondary cell separator coating material (described later) including the ingredient for a secondary cell separator coating material has excellent heat resistance and adhesiveness.

As the carboxy group-containing vinyl monomer, preferably, monocarboxylic acid is used, more preferably, (meth)acrylic acid is used, further more preferably, methacrylic acid is used.

When the raw material of the second polymer contains these, the secondary cell separator (described later) obtained by using the secondary cell separator coating material (described later) including the ingredient for a secondary cell separator coating material has further more excellent heat resistance and adhesiveness.

Further, the raw material of the second polymer may contain, as an optional component, a copolymerizable monomer which is copolymerizable with the (meth)acrylamide and/or the carboxy group-containing vinyl monomer (hereinafter, referred to as a second copolymerizable monomer).

Further, examples of the second copolymerizable monomer include the above-described alkyl (meth)acrylate, the above-described functional group-containing vinyl monomers (excluding the carboxy group-containing vinyl monomer), the above-described vinyl esters, the above-described aromatic vinyl monomers, the above-described unsaturated carboxylic acid amides (excluding the (meth)acrylamide), the above-described heterocyclic vinyl compounds, the above-described vinylidene halide compounds, the above-described α-olefins, the above-described dienes, and the above-described cross-linking vinyl monomers.

These second copolymerizable monomers may be used alone or in combination of two or more.

As the second copolymerizable monomer, preferably, a copolymerizable monomer having a hydrophilic group is used, more specifically, a hydroxyl group-containing vinyl monomer, a sulfonic acid group-containing vinyl monomer, and a phosphoric acid group-containing vinyl monomer are used, further more preferably, a hydroxyl group-containing vinyl monomer is used.

In the raw material of the second polymer, a content ratio of the (meth)acrylamide is, from the viewpoint of obtaining excellent heat resistance, for example, 40 parts by mass or more, preferably 50 parts by mass or more, more preferably 60 parts by mass or more, further more preferably 70 parts by mass or more, and from the viewpoint of obtaining excellent heat resistance, for example, 97 parts by mass or less, preferably 96 parts by mass or less, more preferably 95 parts by mass or less with respect to 100 parts by mass of the total amount of the raw material of the second polymer.

Further, in the raw material of the second polymer, a content ratio of the carboxy group-containing vinyl monomer is, from the vie wpoint of improving adsorption properties with respect to an inorganic filler to be described later and obtaining excellent heat resistance, for example, 3 parts by mass or more, preferably 4 parts by mass or more, more preferably 5 parts by mass or more, and from the viewpoint of suppressing excessive adsorption with respect to an inorganic filler to be described later and obtaining excellent heat resistance, for example, 60 parts by mass or less, preferably 50 parts by mass or less, more preferably 40 parts by mass or less, further more preferably 30 parts by mass or less with respect to 100 parts by mass of the total amount of the raw material of the second polymer.

In addition, in the raw material of the second polymer, a content ratio of the second copolymerizable monomer is within a range in which the core shell particles are capable of being formed by a method to be described later, and is, for example, 27 parts by mass or less, preferably 15 parts by mass or less, and 0 parts by mass or more, particularly preferably 0 parts by mass with respect to 100 parts by mass of the total amount of the raw material of the second polymer.

In other words, the raw material of the second polymer may be a composition consisting of the (meth)acrylamide and the carboxy group-containing vinyl monomer without containing the second copolymerizable monomer, or may be a composition consisting of the (meth)acrylamide, the carboxy group-containing vinyl monomer, and the second copolymerizable monomer.

Preferably, the raw material of the second polymer is a composition consisting of the (meth)acrylamide and the carboxy group-containing vinyl monomer.

Then, the second polymer is a polymer obtained by polymerizing the above-described raw material of the second polymer by a method to be described later.

The second polymer thus obtained has relatively hydrophilicity with respect to the first polymer.

A content ratio of the repeating unit derived from the (meth)acrylamide in the second polymer is the same as the content ratio of the (meth)acrylamide in the raw material of the second polymer.

In other words, the content ratio of the repeating unit derived from the (meth)acrylamide is, from the viewpoint of improving adsorption properties with respect to an inorganic filler to be described later and obtaining excellent heat resistance, 40% by mass or more, preferably 50% by mass or more, more preferably 60% by mass or more, further more preferably 70% by mass or more, particularly preferably 80% by mass or more, and from the viewpoint of improving adsorption properties with respect to an inorganic filler to be described later and obtaining excellent heat resistance, 97% by mass or less, preferably 96% by mass or less, more preferably 95% by mass or less with respect to the total amount of the second polymer.

A content ratio of the repeating unit derived from the carboxy group-containing vinyl monomer in the second polymer is the same as the content ratio of the carboxy group-containing vinyl monomer in the raw material of the second polymer.

In other words, the content ratio of the repeating unit derived from the carboxy group-containing vinyl monomer is, from the viewpoint of improving adsorption properties with respect to an inorganic filler to be described later and obtaining excellent heat resistance, 3% by mass or more, preferably 4% by mass or more, more preferably 5% by mass or more, and from the viewpoint of suppressing excessive adsorption with respect to an inorganic filler to be described later and obtaining excellent heat resistance, for example, 60% by mass or less, preferably 50% by mass or less, more preferably 40% by mass or less, further more preferably 30% by mass or less with respect to the total amount of the second polymer.

Further, a content ratio of the repeating unit derived from the second copolymerizable monomer in the second polymer is the same as the content ratio of the second copolymerizable monomer in the raw material of the second polymer.

In other words, the content ratio of the repeating unit derived from the second copolymerizable monomer is, for example, 27% by mass or less, preferably 15% by mass or less, and 0% by mass or more, particularly preferably 0% by mass with respect to the total amount of the second polymer.

A glass transition temperature of the second polymer is, for example, 150°C or more, preferably 200°C or more, more preferably 210°C or more, further more preferably 220°C or more, particularly preferably 230°C or more, and usually, 400°C or less, preferably 300°C or less, more preferably 280°C or less from the viewpoint of obtaining excellent heat resistance.

When the glass transition temperature of the second polymer is excessively low, the heat resistance of the separator may decrease.

Next, a method for producing an ingredient for a secondary cell separator coating material is described.

Specifically, as a method for producing an ingredient for a secondary cell separator coating material, for example, a method (first method) in which a raw material of the first polymer is polymerized, a first polymer is obtained, and then, a raw material of the second polymer is polymerized in the presence of the first polymer, and a method (second method) in which a raw material of the second polymer is polymerized, a second polymer is obtained, and then, a raw material of the first polymer is polymerized in the presence of the second polymer are used.

First, the first method is described.

The first method includes a step (first step) of obtaining the first polymer obtained by polymerizing the raw material of the first polymer, and a step (second step) of obtaining the second polymer obtained by polymerizing the raw material of the second polymer in the presence of the first polymer.

In the first step, the raw material of the first polymer is first polymerized.

Specifically, the raw material of the first polymer and a polymerization initiator are blended into water, and the raw material of the first polymer is polymerized in water.

The polymerization initiator is not particularly limited, and examples thereof include water-soluble initiators such as persulfate (ammonium persulfate, potassium persulfate, etc.), hydrogen peroxide, organic hydroperoxide, and 4,4'-azobis(4-cyanovaleric acid) acid; oil-soluble initiators such as benzoyl peroxide and azobisisobutyronitrile; and further, redox-based initiators. Preferably, a water-soluble initiator is used, more preferably, persulfate is used, further more preferably, ammonium persulfate is used. These polymerization initiators may be used alone or in combination of two or more.

Further, a mixing ratio of the polymerization initiator is appropriately set in accordance with its purpose and application, and is, for example, 0.05 parts by mass or more, and for example, 10 parts by mass or less, preferably 5 parts by mass or less with respect to 100 parts by mass of the raw material of the first polymer.

As the polymerization conditions, a polymerization temperature is, for example, 30°C or more, preferably 50°C or more, and for example, 95°C or less, preferably 85°C or less under a normal pressure. Further, the polymerization time is, for example, one hour or more, preferably two hours or more, and for example, 30 hours or less, preferably 20 hours or less.

In addition, in the polymerization of the first polymer, if necessary, an emulsifier (surfactant) may be blended from the viewpoint of improving production stability.

Examples of the emulsifier include anionic surfactants such as sulfate ester of higher alcohol, alkylbenzene sulfonate (dodecylbenzene sulfonate etc.), aliphatic sulfonate, alkyl diphenyl ether sulfonate, and ammonium lauryl sulfate, and nonionic surfactants such as alkyl ester-type, alkyl phenyl ether-type, and alkyl ether-type polyethylene glycol. Preferably, an anionic surfactant is used, more preferably, alkyl diphenyl ether sulfonate is used.

A mixing ratio of the emulsifier is appropriately set in accordance with its purpose and application, and is, for example, 0.01 parts by mass or more, and for example, 5 parts by mass or less, preferably 3 parts by mass or less with respect to 100 parts by mass of the raw material of the first polymer.

In addition, in the polymerization of the first polymer, from the viewpoint of improving production stability, for example, a known additive may be added at an appropriate ratio. Examples of the known additive include pH adjusting agents, metal ion sealing agents such as ethylenediaminetetraacetic acid and a salt thereof, and molecular weight adjusting agents (chain transfer agent) such as mercaptans and low molecular halogen compounds.

Further, before or after the polymerization of the first polymer, a neutralizing agent such as ammonia may be blended, and a pH may be adjusted within a range of 7 or more and 11 or less.

Thus, the raw material of the first polymer is polymerized, thereby obtaining the first polymer.

Also, the first polymer is obtained as a dispersion liquid in which the first polymer dispersed in water.

In the dispersion liquid, the solid content concentration of the first polymer is appropriately set in accordance with its purpose and application.

Then, in the second step, the raw material of the second polymer is polymerized in the presence of the first polymer.

Specifically, the raw material of the second polymer and the above-described polymerization initiator are blended into an aqueous dispersion liquid containing the first polymer, and thereafter, preferably, the obtained mixture is matured.

The polymerization initiator is not particularly limited, and an example thereof includes the same polymerization initiator as that used in the polymerization of the above-described raw material of the first polymer. Preferably, a water-soluble initiator is used, more preferably, persulfate is used, further more preferably, ammonium persulfate is used. These polymerization initiators may be used alone or in combination of two or more.

The timing at which the polymerization initiator is blended is not particularly limited, and for example, the polymerization initiator may be added before the raw material of the second polymer is blended, may be added when the raw material of the second polymer is blended, or may be added after the raw material of the second polymer is blended. Further, the polymerization initiator used in the polymerization of the raw material of the second polymer may be blended in advance at the time of the polymerization of the above-described raw material of the first polymer.

Further, the mixing ratio of the polymerization initiator is appropriately set in accordance with its purpose and application, and is, for example, 0.05 parts by mass or more and 5 parts by mass or less with respect to 100 parts by mass of the raw material of the second polymer.

As the polymerization conditions, a polymerization temperature is, for example, 30°C or more, preferably 50°C or more, and for example, 95°C or less, preferably 85°C or less under a normal pressure. Further, the polymerization time is, for example, 0.5 hours or more, preferably 1.5 hours or more, and for example, 20 hours or less, preferably 10 hours or less.

The maturing time is, for example, 0.5 hours or more, preferably 1.5 hours or more, and for example, 6 hours or less, preferably 3 hours or less.

Thus, the raw material of the second polymer is polymerized, thereby obtaining the second polymer.

As a result, a dispersion liquid (ingredient for a secondary cell separator coating material) containing the first polymer and the second polymer is obtained.

Further, when the raw material of the second polymer is polymerized on the surface of the first polymer, the ingredient for a secondary cell separator coating material is obtained as the core shell particles in which the first polymer (core) is covered with the second polymer (shell).

In the dispersion liquid, the content of the ingredient for a secondary cell separator coating material (solid content concentration of the dispersion liquid) is, for example, 5% by mass or more, and for example, 50% by mass or less.

Further, a pH value of the dispersion liquid is, for example, 5 or more, and for example, 11 or less.

When the above-described pH value is within the above-described range, dispersion stability is improved, and also, admixture stability of the ingredient for a secondary cell separator coating material with the inorganic filler (described later) is ensured.

Next, the second method is described.

The second method includes a step (third step) of obtaining the second polymer obtained by polymerizing the raw material of the second polymer, and a step (fourth step) of obtaining the first polymer obtained by polymerizing the raw material of the first polymer in the presence of the second polymer.

In the third step, first, the raw material of the second polymer is polymerized.

Specifically, the raw material of the second polymer and the above-described polymerization initiator are blended into water, and the raw material of the second polymer is polymerized in water.

As the polymerization initiator, preferably, a water-soluble initiator is used, more preferably, persulfate is used, further more preferably, ammonium persulfate is used.

These polymerization initiators may be used alone or in combination of two or more.

Further, a mixing ratio of the polymerization initiator is appropriately set in accordance with its purpose and application, and is, for example, 0.05 parts by mass or more, and for example, 10 parts by mass or less, preferably 5 parts by mass or less with respect to 100 parts by mass of the raw material of the second polymer.

As the polymerization conditions, a polymerization temperature is, for example, 30°C or more, preferably 50°C or more, and for example, 95°C or less, preferably 85°C or less under a normal pressure. Further, the polymerization time is, for example, 0.5 hours or more, preferably 1.5 hours or more, and for example, 20 hours or less, preferably 10 hours or less.

In addition, in the polymerization of the second polymer, from the viewpoint of improving production stability, for example, a known additive may be blended at an appropriate ratio. Examples of the known additive include pH adjusting agents, metal ion sealing agents such as ethylenediaminetetraacetic acid and a salt thereof, and molecular weight adjusting agents (chain transfer agent) such as mercaptans and low molecular halogen compounds.

Thus, the raw material of the second polymer is polymerized, thereby obtaining the second polymer.

Further, the second polymer is obtained as an aqueous solution.

In the aqueous solution containing the second polymer, the solid content concentration of the second polymer is, for example, 5% by mass or more, and for example, 50% by mass or less.

Then, in the fourth step, the raw material of the first polymer is polymerized in the presence of the second polymer.

Specifically, the raw material of the first polymer and the above-described polymerization initiator are blended into the aqueous solution containing the second polymer, and thereafter, preferably, the obtained mixture is matured.

As the polymerization initiator, preferably, a water-soluble initiator is used, more preferably, persulfate is used, further more preferably, ammonium persulfate is used.

These polymerization initiators may be used alone or in combination of two or more.

The timing at which the polymerization initiator is blended is not particularly limited, and for example, the polymerization initiator may be added before the raw material of the first polymer is blended, may be added when the raw material of the first polymer is blended, or may be added after the raw material of the first polymer is blended. Further, the polymerization initiator used in the polymerization of the raw material of the first polymer may be blended in advance at the time of the polymerization of the above-described raw material of the second polymer.

Further, the mixing ratio of the polymerization initiator is appropriately set in accordance with its purpose and application, and is, for example, 0.05 parts by mass or more, and 10 parts by mass or less with respect to 100 parts by mass of the raw material of the first polymer.

As the polymerization conditions, a polymerization temperature is, for example, 30°C or more, preferably 50°C or more, and for example, 95°C or less, preferably 85°C or less under a normal pressure. Further, the polymerization time is, for example, 0.5 hours or more, and for example, 20 hours or less, preferably 10 hours or less.

The maturing time is, for example, 0.5 hours or more, preferably 1.5 hours or more, and for example, 6 hours or less.

In addition, in the polymerization of the first polymer, from the viewpoint of improving production stability, if necessary, the above-described emulsifier (surfactant) and additive may be also blended at an appropriate ratio.

As the emulsifier, preferably, an anionic surfactant is used, more preferably, alkyldiphenylether sulfonate is used. These emulsifiers may be used alone or in combination of two or more.

Further, the mixing ratio of the emulsifier is appropriately set in accordance with its purpose and application, and is, for example, 0.1 parts by mass or more, and for example, 5 parts by mass or less with respect to 100 parts by mass of the raw material of the first polymer.

Further, before or after the polymerization of the first polymer, a neutralizing agent such as ammonia may be blended, and a pH may be adjusted within a range of 7 or more and 11 or less.

Thus, the raw material of the first polymer is polymerized, thereby obtaining the first polymer.

As a result, a dispersion liquid (ingredient for a secondary cell separator coating material) containing the first polymer and the second polymer is obtained.

In addition, when the relatively hydrophobic first polymer is polymerized in the second polymer which is previously formed in water, the ingredient for a secondary cell separator coating material is obtained as the core shell particles in which the first polymer (core) is covered with the second polymer (shell).

In the dispersion liquid, the content (solid content concentration of the dispersion liquid) of the ingredient for a secondary cell separator coating material is, for example, 5% by mass or more, and for example, 50% by mass or less.

Further, a pH value of the dispersion liquid is, for example, 5 or more, and for example, 11 or less.f

When the above-described pH value is within the above-described range, the dispersion stability is improved, and also, the admixture stability of the ingredient for a secondary cell separator coating material with the inorganic filler (described later) is ensured.

In such an ingredient for a secondary cell separator coating material, a ratio (the second polymer/the first polymer) of the mass of the second polymer to the mass of the first polymer is 4 or more, preferably 7 or more, more preferably 9 or more, and 250 or less, preferably 200 or less, more preferably 50 or less, further more preferably 40 or less, particularly preferably 20 or less from the viewpoint of obtaining a secondary cell separator having excellent heat resistance and air permeability, and further, also having excellent adhesiveness and electrolytic solution resistance.

The mass of the first polymer and the mass of the second polymer can be calculated from a charged amount of the raw material of the first polymer and the raw material of the second polymer. In other words, the above-described mass of the second polymer means the mass of the raw material of the second polymer, and the above-described mass of the first polymer means the mass of the raw material of the first polymer.

Also, a volume average particle size ($D_{50}$) of the ingredient for a secondary cell separator coating material is, for example, 0.2 $\mu$m or more, preferably 0.4 $\mu$m or more, more preferably 0.6 $\mu$m or more, and for example, 5.0 $\mu$m or less, preferably 2.0 $\mu$m or less from the viewpoint of suppressing permeation of the core shell particles into pores of a porous film to be described later, and obtaining excellent air permeability.

The above-described volume average particle size can be determined by measuring the particle size with a particle size measuring device (manufactured by OTSUKA ELECTRONICS CO., LTD., FPAR1000).

The above-described ingredient for a secondary cell separator coating material includes the core shell particles including the core layer containing the first polymer, and the shell layer covering the first polymer and containing the second polymer, and the first polymer has the repeating unit derived from the alkyl (meth)acrylate. Further, the second polymer has the repeating unit derived from the (meth)acrylamide and the repeating unit derived from the carboxy group-containing vinyl monomer at a predetermined ratio. Then, the ratio (the second polymer/the first polymer) of the mass of the second polymer to the mass of the first polymer is adjusted within a predetermined range.

Therefore, according to the above-described ingredient for a secondary cell separator coating material, it is possible to obtain a secondary cell separator having excellent heat resistance and air permeability, and further, also having excellent adhesiveness and electrolytic solution resistance.

In other words, in the secondary cell separator coating material (described later), the core shell particles containing the first polymer and the second polymer are adsorbed on the inorganic filler (described later), and the inorganic filler (described later) is bound, thereby improving the heat resistance.

In this regard, when an amount of repeating units derived from the (meth)acrylamide in the second polymer is excessively small, binding properties of the second polymer with respect to the inorganic filler (described later) are not sufficient, and the heat resistance cannot be sufficiently obtained.

In addition, when the amount of repeating units derived from the (meth)acrylamide in the second polymer is excessively large, an amount of repeating units derived from the carboxy group-containing vinyl monomer in the second polymer becomes small.

Then, for example, when the amount of repeating units derived from the carboxy group-containing vinyl monomer in the second polymer is excessively small, the adsorption properties of the second polymer with respect to the inorganic filler (described later) are not sufficient, and the heat resistance cannot be sufficiently obtained.

In addition, when the amount of repeating units derived from the carboxy group-containing vinyl monomer in the second polymer is excessively large, an amount of core shell particles adsorbed on one inorganic filler (described later) becomes large, and the inorganic filler (described later) cannot be uniformly bound, so that the heat resistance cannot be sufficiently obtained.

On the other hand, in the core shell particles, when the content ratio of the repeating unit derived from the (meth)acrylamide and the content ratio of the repeating unit derived from the carboxy group-containing vinyl monomer of the shell layer (the second polymer) are adjusted within a predetermined range, and further, the ratio (the second polymer/the first polymer) of the mass of the second polymer to the mass of the first polymer is adjusted within a predetermined range, the heat resistance, the air permeability, the adhesiveness, and the electrolytic solution resistance can be obtained in good balance.

The secondary cell separator coating material of the present invention includes the above-described ingredient for a secondary cell separator coating material, and if necessary, an inorganic filler, and a dispersant.

A mixing ratio of the ingredient for a secondary cell separator coating material is the total amount of the ingredient for a secondary cell separator coating material, the inorganic filler, and the dispersant (hereinafter, referred to as a coating material component for a secondary cell separator).

The mixing ratio of the ingredient for a secondary cell separator coating material is, for example, 0.1 parts by mass or more (solid content), and for example, 10 parts by mass or less (solid content) with respect to 100 parts by mass of the total amount of the ingredient for a secondary cell separator coating material, the inorganic filler, and the dispersant (solid content).

Examples of the inorganic filler include oxides such as alumina, silica, titania, zirconia, magnesia, ceria, yttria, zinc oxide, and iron oxide; nitrides such as silicon nitride, titanium nitride, and boron nitride; carbides such as silicon carbide and calcium carbonate; sulfates such as magnesium sulfate and aluminum sulfate; hydroxides such as aluminum hydroxide and aluminum hydroxide oxide; silicates such as talc, kaolinite, dickite, nacrite, halloysite, pyrophyllite, montmorillonite, sericite, mica, amesite, bentonite, asbestos, zeolite, calcium silicate, magnesium silicate, diatomous earth, silica sand, and glass; and potassium titanate. Preferably, oxides and hydroxides are used, more preferably, aluminum oxide and aluminum hydroxide oxide are used.

A mixing ratio of the inorganic filler is, for example, 50 parts by mass or more (solid content), and for example, 99.7 parts by mass or less (solid content) with respect to 100 parts by mass (solid content) of the coating material component for a secondary cell separator.

Examples of the dispersant include ammonium polycarboxylate and sodium polycarboxylate.

When the dispersant is the ammonium polycarboxylate, it is possible to uniformly disperse the above-described ingredient for a secondary cell separator coating material and the inorganic filler, and obtain a coating film (described later) having a uniform thickness.

A mixing ratio of the dispersant is, for example, 0.1 parts by mass or more (solid content) and for example, 5 parts by mass or less (solid content) with respect to 100 parts by mass (solid content) of the coating material component for a secondary cell separator.

In order to obtain the secondary cell separator coating material, first, an inorganic filler and a dispersant are blended into water at the above-described ratio, thereby preparing an inorganic filler dispersion liquid.

Then, the ingredient for a secondary cell separator coating material (or a dispersion liquid containing the ingredient for a secondary cell separator coating material) is blended into the inorganic filler dispersion liquid at the above-described ratio to be stirred.

A stirring method is not particularly limited, and an example thereof includes mechanical stirring with ball mills, bead mills, planetary ball mills, vibrating ball mills, sand mills, colloid mills, attritors, roll mills, high-speed impeller dispersion, dispersers, homogenizers, high-speed shock mills, ultrasonic dispersion, and stirring blades.

Thus, the secondary cell separator coating material is obtained.

Also, the secondary cell separator coating material is obtained as a dispersion liquid which is dispersed in water.

In addition, if necessary, an additive may be blended into the secondary cell separator coating material at an appropriate ratio. Examples of the additive include hydrophilic resins, thickeners, wetting agents, defoaming agents, and PH adjusting agents.

These additives may be used alone or in combination of two or more.

Since the above-described secondary cell separator coating material includes the above-described ingredient for a secondary cell separator coating material, it is possible to obtain a secondary cell separator having excellent heat resistance and air permeability, and further, also having excellent adhesiveness and electrolytic solution resistance.

Then, the secondary cell separator coating material can be preferably used as a coating material for a secondary cell separator.

The secondary cell separator of the present invention can be produced by a production method including a step of preparing a porous film and a step of coating the above-described coating material for a separator onto at least one surface of the porous film.

In the step of preparing the porous film, the porous film is prepared.

Examples of the porous film include polyolefin porous films such as polyethylene and polypropylene and aromatic polyamide porous films, and preferably, a polyolefin porous film is used. The porous film may be subjected to surface treatment if necessary. Examples of the surface treatment include corona treatment and plasma treatment.

A thickness of the porous film is, for example, 1 $\mu$m or more, preferably 5 $\mu$m or more, and for example, 40 $\mu$m or less, preferably 20 $\mu$m or less.

Next, in the step of coating the above-described coating material for a separator onto at least one surface of the porous film, a dispersion liquid of the above-described coating material for a separator is coated onto at least one surface of the porous film, and then, if necessary, it is dried, thereby obtaining a coating film.

A coating method is not particularly limited, and examples thereof include gravure coater methods, small diameter gravure coater methods, reverse roll coater methods, transfer roll coater methods, kiss coater methods, dip coater methods, micro gravure coater methods, knife coater methods, air doctor coater methods, blade coater methods, rod coater methods, squeeze coater methods, cast coater methods, dye coater methods, screen printing methods, and spray coating methods.

As the drying conditions, a drying temperature is, for example, 40°C or more, and for example, 80°C or less.

A thickness of the coating film is, for example, 1 $\mu$m or more, preferably 3 $\mu$m or more, and for example, 10 $\mu$m or less, preferably 8 $\mu$m or less.

Thus, the secondary cell separator including the porous film, and the coating film of the above-described secondary cell separator coating material disposed on at least one surface of the porous film is produced.

In the above-described description, the coating film of the secondary cell separator coating material is disposed on at least one surface of the porous film. Alternatively, the above-described coating film can be also disposed on both surfaces of the porous film.

Since the above-described secondary cell separator includes the coating film of the above-described secondary cell separator coating material, it has excellent heat resistance and air permeability, and further, also has excellent adhesiveness and electrolytic solution resistance.

According to the above-described method for producing a secondary cell separator, it is possible to efficiently produce the secondary cell separator having excellent heat resistance and air permeability, and further, also having excellent adhesiveness and electrolytic solution resistance.

Then, the secondary cell separator can be preferably used as the separator for a secondary cell.

The secondary cell of the present invention includes a positive electrode, a negative electrode, the above-described secondary cell separator which is disposed between the positive electrode and the negative electrode, and an electrolyte which is impregnated into the positive electrode, the negative electrode, and the above-described secondary cell separator.

An example of the positive electrode includes a known electrode including a positive electrode collector and a positive electrode active material which is laminated on the positive electrode collector.

Examples of the positive electrode collector include electrically conductive materials such as aluminum, titanium, stainless steel, nickel, calcined carbon, electrically conductive polymers, and electrically conductive glass.

The positive electrode active material is not particularly limited, and examples thereof include known positive electrode active materials such as lithium-containing transition metal oxide, lithium-containing phosphate, and lithium-containing sulfate.

These positive electrode active materials may be used alone or in combination of two or more.

An example of the negative electrode includes a known electrode including a negative electrode collector and a negative electrode active material which is laminated on the negative electrode collector.

Examples of the negative electrode collector include electrically conductive materials such as copper and nickel.

The negative electrode active material is not particularly limited, and examples thereof include carbon active materials such as graphite, soft carbon, and hard carbon.

These negative electrode active materials may be used alone or in combination of two or more.

When a lithium ion cell is used as a secondary cell, an example of the electrolyte includes a solution in which a lithium salt is dissolved in a carbonate compound such as ethylene carbonate (EC), propylene carbonate (PC), and ethyl methyl carbonate (EMC).

Then, in order to produce the secondary cell, for example, the separator of the secondary cell is sandwiched between the positive electrode and the negative electrode to be housed in a cell casing (cell), and the electrolyte is injected into the cell casing.

Thus, the secondary cell can be obtained.

Since the above-described secondary cell includes the above-described secondary cell separator, it has excellent heat resistance and air permeability, and further, also has excellent adhesiveness and electrolytic solution resistance. As a result, the above-described secondary cell has excellent durability and power generation efficiency.

Examples

The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified in the following description.

1. Preparation of Ingredient for Secondary Cell Separator Coating Material

Production Example 1

A separable flask equipped with a stirrer and a reflux condenser was charged with 260.0 parts of distilled water to be replaced with nitrogen gas, and then, the charged product was heated to 80°C. Then, 0.5 parts of ammonium persulfate was added, and thereafter, the emulsified following raw materials of the first polymer were continuously added over a period of 20 minutes.

n-butyl acrylate: 5.0 parts
Styrene: 4.5 parts
Acrylamide: 0.47 parts
Methacrylic acid: 0.03 parts
Ammonium lauryl sulfate: 0.1 parts
Distilled water: 10.0 parts

After holding for 30 minutes, further, a mixture of the following raw materials of the second polymer and water was continuously added over a period of three hours while stirring, and then, the obtained mixture was matured at the same temperature for three hours to complete the polymerization. Thereafter, an appropriate amount of water was added, thereby obtaining an ingredient for a separator coating material. The solid content concentration of the dispersion liquid was 10.0% by mass.

Methacrylamide: 291.0 parts
Methacrylic acid: 32.3 parts
25% ammonia water: 18.1 parts
Distilled water: 1017.5 parts

Further, the glass transition temperature (Tg) of the first polymer and the second polymer was calculated by the following FOX formula.

$$1/Tg = W_1/Tg_1 + W_2/Tg_2 + \cdots + W_n/Tg_n \quad (1)$$

[In formula, Tg represents the glass transition temperature of the copolymer (unit: K), $Tg_i$ (i=1, 2, $\cdots$ n) represents the glass transition temperature (unit: K) when the monomer i forms a single polymer, and $W_1$ (i=1, 2, $\cdots$ n) represents a mass fraction in the total monomer of the monomer i.]

A volume average particle size ($D_{50}$) of core shell particles in a dispersion liquid was measured with a particle size measuring device (manufactured by OTSUKA ELECTRONICS CO., LTD., FPAR1000).

Production Examples 2 to 7, and Production Comparative Examples 1 to 4

An ingredient for a separator coating material was produced in the same manner as in Production Example 1, except that the mixing formulation was changed in accordance with the description of Table 1. Production Examples 4 to 7 are reference production examples and not part of the claimed invention. In addition, the glass transition temperature of the first polymer and the second polymer was calculated in the same manner as in Production Example 1, thereby measuring the volume average particle size ($D_{50}$) of the core shell particles.

Production Comparative Example 5

A dispersion liquid as an ingredient for a separator coating material was obtained in conformity with Example 1 of International Patent Publication No. WO2017/026095.

In other words, a four-necked flask equipped with a stirrer, a thermometer, a reflux condensing tube, and a nitrogen gas introduction tube was charged with the following raw materials of the water-soluble polymer, and oxygen in the reaction system was removed by nitrogen gas. Next, as polymerization initiators, 7 parts of aqueous solution of 5% ammonium persulfate and 3 parts of aqueous solution of 5% sodium bisulfite were charged into the flask while stirring, and then, the temperature was increased from room temperature to 80°C, and the temperature of the obtained mixture was held for three hours to be polymerized. Thereafter, 162 parts of ion-exchanged water was added, thereby obtaining an aqueous solution of the water-soluble polymer.

Acrylamide: 90 parts
Methacrylic acid: 9 parts
Dimethylacrylamide: 1 part
Ion-exchanged water: 365 parts
Isopropyl alcohol: 5 parts

Separately, 70 parts of ion-exchanged water; as an emulsifier, 0.15 parts of sodium lauryl sulfate; and as a polymerization initiator, 0.5 parts of ammonium peroxodisulfate were supplied to a reactor equipped with a stirrer, and the gas phase portion was replaced with nitrogen gas to raise the temperature to 60°C. Thereafter, the following particulate polymers were continuously added to the reactor. The mixture was polymerized at 60°C during the addition, and stirred at 70°C for three hours after completion of the addition, and then, the reaction was terminated. Thus, a dispersion liquid of the particulate polymer was obtained.

Ion-exchanged water: 50 parts
Sodium dodecylbenzene sulfonate: 0.5 parts
n-butyl acrylate: 94.8 parts
Methacrylic acid: 1 part
Acrylonitrile: 2 parts
N-methylolacrylamide: 1.2 parts
Allyl glycidyl ether: 1 part

Then, the obtained dispersion liquid of the water-soluble polymer and the dispersion liquid of the particulate polymer were mixed, thereby obtaining a mixed dispersion liquid. A mixing ratio was set to a ratio of 2 parts by mass of the particulate polymer with respect to 1 part by mass of the water-soluble polymer.

In addition, the glass transition temperature of the water-soluble polymer and the particulate polymer was calculated in the same manner as in Production Example 1.

A volume average particle size ($D_{50}$) of a polymer in the dispersion liquid was measured with a particle size measuring device (manufactured by OTSUKA ELECTRONICS CO., LTD., FPAR1000).

2. Production of Secondary Cell Separator Coating Material and Secondary Cell Separator

Example 1

As a pigment, 100 parts by mass of aluminum hydroxide oxide (manufactured by TAIMEI CHEMICALS Co., Ltd., Boehmite GradeC06, particle size: 0.7 $\mu$m) and as a dispersant, 3.0 parts by mass (in terms of solid content) of an aqueous solution of ammonium polycarboxylate (manufactured by SAN NOPCO LIMITED, SN Dispersant 5468) were uniformly dispersed in 110 parts by mass of water, thereby obtaining a pigment dispersion liquid. Then, the dispersion liquid produced in Production Example 1 was added to the pigment dispersion liquid so as to be 5 parts by mass in terms of solid content. Further, water was added and adjusted so as to have the solid content of 40%, and stirred for 15 minutes, thereby preparing a secondary cell separator coating material.

On the other hand, the surface of the polyolefin resin porous film was subjected to corona treatment. More specifically, as a polyolefin resin porous film, part number of SW509C+ (film thickness of 9.6 $\mu$m, porosity of 40.6%, air permeability of 158 g/100 ml, surface density of 5.5 g/m$^2$, manufactured by Changzhou Senior New Energy Materials Co., Ltd.) was prepared. Next, the surface of the polyolefin resin porous film was cut into an A4 size, and thereafter, the surface of the polyolefin resin porous film was subjected to corona treatment with a switch-back automated running corona surface treatment device (manufactured by WEDGE CO., LTD.) under the conditions of an output of 0.15 KW, a conveyance rate of 3.0 m/s×2 times, and a corona discharge distance of 9 mm.

Then, the above-described secondary cell separator coating material was coated onto the surface of the polyolefin resin porous film which was subjected to the corona treatment using a wire bar. After the coating, the obtained coated product was dried at 50°C, thereby forming a coating film having a thickness of 5 $\mu$m on the surface of the polyolefin resin porous film.

Thus, the secondary cell separator was produced.

Examples 2 to 7 and Comparative Examples 1 to 5

A secondary cell separator was produced in the same manner as in Example 1, except that a dispersion liquid produced in Production Examples 2 to 7 and Production Comparative Examples 1 to 5 was used instead of the dispersion liquid produced in Production Example 1. Examples 4 to 7 are reference examples and not part of the claimed invention.

3. Evaluation

(Heat Resistance)

Each of the secondary cell separators of Examples and Comparative Examples was cut into pieces having a size of 5 cm× 5 cm to be used as test pieces. After the test pieces were left to stand in an oven at 150°C for one hour, a length of each side was measured, and a thermal shrinkage rate was calculated. The superiority and inferiority of the heat resistance was evaluated in accordance with the following criteria. The results are shown in Table 2.
A: thermal shrinkage rate was below 15%.
B: thermal shrinkage rate was 15% or more and below 25%.
C: thermal shrinkage rate was 25% or more and below 60%.
D: thermal shrinkage rate was 60% or more.

(Ion Permeability)

The air permeability resistance of each of the secondary cell separators of Examples and Comparative Examples was obtained by measurement in conformity with JIS-P-8117 with an Oken-type air permeability-smoothness tester manufactured by ASAHI SEIKO CO., LTD. It was evaluated that the smaller the air permeability resistance was, the more excellent the ion permeability was. Also, the superiority and inferiority of the ion permeability was evaluated in accordance with the following criteria. The results are shown in Table 2.
A: air permeability resistance was below 180 s/100 mL.
B: air permeability resistance was 180 s/100 mL or more and below 220 s/100 mL.
C: air permeability resistance was 220 s/100 mL or more and below 300 s/100 mL.
D: air permeability resistance was 300 s/100 mL or more.

(Adhesiveness)

Each of the secondary cell separators of Examples and Comparative Examples was cut into a size of 5 cm×10 cm as test pieces. A 180° peeling test was carried out by a method in conformity with JIS Z1522. At that time, a tensile rate of a cellophane adhesive tape was set at 10 mm/min. The measurement was carried out three times, and an average value thereof was calculated. The superiority and inferiority of the adhesiveness was evaluated in accordance with the following criteria. The results are shown in Table 2.
A: average value of the adhesive strength was 70 N/m or more.
B: average value of the adhesive strength was 50 N/m or more and below 70 N/m.
C: average value of the adhesive strength was 30 N/m or more and below 50 N/m.
D: average value of the adhesive strength was below 30 N/m.

(Electrolytic Solution Resistance)

Each of the ingredients for a secondary cell separator coating material of Examples and Comparative Examples was coated onto a tray made of polypropylene, dried at room temperature overnight, and further, dried under a reduced pressure at room temperature for eight hours, thereby obtaining a film of 500 μm. The obtained film was left to stand in an ethylene carbonate (EC)/ethyl methyl carbonate (EMC)=1/1 (w/w) solution at 90°C for seven hours, and the weight of the swollen film was measured. A ratio of the weight of the swollen film to the weight of the film before swelling was calculated. In addition, the superiority and inferiority of the electrolytic solution resistance was evaluated in accordance with the following criteria. The results are shown in Table 2.

A: swelling ratio was below 150%.
B: swelling ratio was 150% or more and below 200%.
C: swelling ratio was 200% or more and below 300%.
D: swelling ratio was 300% or more.

[Table 1]

Table 1

| No. | Raw Material of Second Polymer (% by mass) | | | | | Raw Material of First Polymer (% by mass) | | | | | | | | Second Polymer/ First Polymer (mass ratio) |
|---|---|---|---|---|---|---|---|---|---|---|---|---|---|---|
| | Mam | Mac | HEMA | AM | DMAM | St | BA | Mac | HEMA | AM | AN | N-MAM | AGE | |
| Production Ex. 1 | 90 | 10 | - | - | - | 40 | 55 | 0.3 | - | 4.7 | - | - | - | 95/5 |
| Production Ex. 2 | 70 | 20 | 10 | - | - | 45 | 50 | - | - | 5 | - | - | - | 90/10 |
| Production Ex. 3 | 60 | 40 | - | - | - | 50 | 45 | 0.3 | - | 4.7 | - | - | - | 85/15 |
| Production Ex. 4 | 90 | 10 | - | - | - | 67 | 28 | 0.3 | - | 4.7 | - | - | - | 0.5/99.5 |
| Production Ex. 5 | 90 | 10 | - | - | - | 20 | 75 | 0.3 | - | 4.7 | - | - | - | 3/97 |
| Production Ex. 6 | 40 | 60 | - | - | - | 40 | 55 | 0.3 | - | 4.7 | - | - | - | 5/95 |
| Production Ex. 7 | 40 | 60 | - | - | - | 44 | 55 | 0.3 | - | 0.7 | - | - | - | 5/95 |
| Production Comparative Ex. 1 | 100 | - | - | - | - | 40 | 55 | 0.3 | - | 4.7 | - | - | - | 95/5 |
| Production Comparative Ex. 2 | 90 | 10 | - | - | - | 40 | 55 | 0.3 | - | 4.7 | - | - | - | 40/60 |
| Production Comparative Ex. 3 | 70 | 20 | 10 | - | - | 40 | 55 | 0.3 | - | 4.7 | - | - | - | 20/80 |
| Production Comparative Ex. 4 | 70 | 20 | 10 | - | - | - | - | - | - | - | - | - | - | 100/0 |
| No. | Raw Material of Water-Soluble Polymer (% by mass) | | | | | Raw Material of Particulate Polymer (% by mass) | | | | | | | | Mixing Ratio |
| | Mam | Mac | HEMA | AM | DMAM | St | BA | Mac | HEMA | AM | AN | N-MAM | AGE | |
| Production Comparative Ex. 5 | - | 9 | - | 90 | 1 | - | 94.8 | 1 | - | - | 2 | 1.2 | 1 | 1/2 |
| *Production Examples 4 to 7 are reference production examples and not part of the claimed invention. | | | | | | | | | | | | | | |

Table 2

| No. | Core Shell Particle | | | Separator | | | |
|---|---|---|---|---|---|---|---|
| | Tg of Second Polymer | Tg of First Polymer | Particle Size | Heat Resistance | Air Permeability | Adhesiveness | Electrolytic Solution Resistance |
| Ex. 1 | 248°C | -3°C | 0.6 μm | A | A | A | A |
| Ex. 2 | 211°C | 4°C | 1 μm | A | A | A | A |
| Ex. 3 | 225°C | 12°C | 1.5 μm | A | A | A | A |
| Ex. 4 | 248°C | 40°C | 0.4 μm | A | A | B | A |
| Ex. 5 | 248°C | -30°C | 0.4 μm | B | B | A | A |
| Ex. 6 | 212°C | -3°C | 0.6 μm | A | B | A | A |
| Ex. 7 | 212°C | -4°C | 1.9 μm | B | B | A | A |
| Comparative Ex. 1 | 256°C | -3°C | 0.4 μm | D | D | C | A |
| Comparative Ex. 2 | 248°C | -3°C | 2.1 μm | B | A | A | B |
| Comparative Ex. 3 | 248°C | -3°C | 1.5 μm | D | A | A | C |
| Comparative Ex. 4 | 248°C | - | - | A | B | C | A |
| No. | Particle Size | | | Separator | | | |
| | Tg of Water-Soluble Polymer | Tg of Particulate Polymer | Particle Size | Heat Resistance | Air Permeability | Adhesiveness | Electrolytic Solution Resistance |
| Comparative Ex. 5 | 155°C | -45°C | 0.2 μm | C | D | B | B |
| *Examples 4 to 7 are reference examples and not part of the claimed invention. | | | | | | | |

The details of abbreviations in Table are described below.

Mam: methacrylamide
Mac: methacrylic acid
HEMA: 2-hydroxyethyl methacrylate
AM: acrylamide
DMAM: dimethylacrylamide
St: styrene
BA: n-butyl acrylate
AN: acrylonitrile
N-MAM: N-methylolacrylamide
AGE: allyl glycidyl ether

INDUSTRIAL APPLICATION

The ingredient for a secondary cell separator coating material, the secondary cell separator coating material, the secondary cell separator, the method for producing a secondary cell separator, and the secondary cell of the present invention are preferably used in various industrial fields requiring secondary cells.

## Claims

1. An ingredient for a secondary cell separator coating material comprising:

   a core shell particle including a core layer containing a first polymer and a shell layer covering the first polymer and containing a second polymer, wherein
   the first polymer has a repeating unit derived from alkyl (meth)acrylate;
   the second polymer has a repeating unit derived from (meth)acrylamide and a repeating unit derived from a carboxy group-containing vinyl monomer;
   a content ratio of the repeating unit derived from the (meth)acrylamide is 40% by mass or more and 97% by mass or less, and a content ratio of the repeating unit derived from the carboxy group-containing vinyl monomer is 3% by mass or more and 60% by mass or less with respect to the total amount of the second polymer; and
   a ratio (second polymer/first polymer) of the mass of the second polymer to the mass of the first polymer is 4 or more and 250 or less.

2. The ingredient for a secondary cell separator coating material according to claim 1, wherein
   a volume average particle size ($D_{50}$) of the core shell particle is 0.4 $\mu$m or more and 2.0 $\mu$m or less.

3. A secondary cell separator coating material comprising:
   the ingredient for a secondary cell separator coating material according to claim 1.

4. The secondary cell separator coating material according to claim 3 further comprising:
   an inorganic filler and a dispersant.

5. A secondary cell separator comprising:

   a porous film and
   a coating film of the secondary cell separator coating material according to claim 3 disposed on at least one surface of the porous film.

6. A method for producing a secondary cell separator comprising:

   a step of preparing a porous film and
   a step of coating the secondary cell separator coating material according to claim 3 onto at least one surface of the porous film.

7. A secondary cell comprising:
   a positive electrode, a negative electrode, and the secondary cell separator according to claim 5 disposed between the positive electrode and the negative electrode.

## Patentansprüche

1. Inhaltsstoff für ein Beschichtungsmaterial für einen Sekundärzellenseparator, umfassend:

   einen Kern-Hülle-Partikel, enthaltend eine Kernschicht, die ein erstes Polymer enthält, und eine Hüllschicht, die das erste Polymer bedeckt und ein zweites Polymer enthält, wobei
   das erste Polymer eine Wiederholungseinheit aufweist, die von Alkyl(meth)acrylat stammt;
   das zweite Polymer eine Wiederholungseinheit, die von (Meth)acrylamid stammt, und eine Wiederholungseinheit, die von einem Carboxygruppen-haltigen Vinylmonomer stammt, aufweist;
   wobei, bezogen auf die Gesamtmenge des zweiten Polymers, ein Massenanteil der Wiederholungseinheit, die von dem (Meth)acrylamid stammt, 40 Massen-% oder mehr und 97 Massen-% oder weniger beträgt und ein Massenanteil der Wiederholungseinheit, die von dem Carboxygruppen-haltigen Vinylmonomer stammt, 3 Massen-% oder mehr und 60 Massen-% oder weniger beträgt; und
   ein Verhältnis (zweites Polymer/erstes Polymer) von der Masse des zweiten Polymers zu der Masse des ersten Polymers 4 oder mehr und 250 oder weniger beträgt.

2. Inhaltsstoff für ein Beschichtungsmaterial für einen Sekundärzellenseparator gemäß Anspruch 1, wobei

eine volumenmittlere Partikelgröße ($D_{50}$) des Kern-Hülle-Partikels 0,4 μm oder mehr und 2,0 μm oder weniger beträgt.

3. Beschichtungsmaterial für einen Sekundärzellenseparator, umfassend:
den Inhaltsstoff für ein Beschichtungsmaterial für einen Sekundärzellenseparator gemäß Anspruch 1.

4. Beschichtungsmaterial für einen Sekundärzellenseparator gemäß Anspruch 3, ferner umfassend:
einen anorganischen Füllstoff und ein Dispergiermittel.

5. Sekundärzellenseparator, umfassend:

einen porösen Film und
einen Beschichtungsfilm des Beschichtungsmaterials für einen Sekundärzellenseparator gemäß Anspruch 3, der auf mindestens einer Oberfläche des porösen Films angeordnet ist.

6. Verfahren zur Herstellung eines Sekundärzellenseparators, umfassend:

einen Schritt des Herstellens eines porösen Films, und
einen Schritt des Auftragens des Beschichtungsmaterials für einen Sekundärzellenseparator gemäß Anspruch 3 auf mindestens eine Oberfläche des porösen Films.

7. Sekundärzelle, umfassend:
eine positive Elektrode, eine negative Elektrode und den Sekundärzellenseparator gemäß Anspruch 5, der zwischen der positiven Elektrode und der negativen Elektrode angeordnet ist.


**Revendications**

1. Ingrédient pour un matériau de revêtement de séparateur de cellule secondaire comprenant :

une particule noyau-enveloppe incluant une couche de noyau contenant un premier polymère et une couche d'enveloppe recouvrant le premier polymère et contenant un second polymère, dans lequel
le premier polymère présente un motif de répétition dérivé d'alkyle (méth)acrylate ;
le second polymère présente un motif de répétition dérivé de (méth)acrylamide et un motif de répétition dérivé d'un monomère de vinyle contenant un groupe carboxy ;
un rapport de teneur du motif de répétition dérivé du (méth)acrylamide est de 40 % en masse ou plus et de 97 % en masse ou moins, et un rapport de teneur du motif de répétition dérivé du monomère de vinyle contenant le groupe carboxy est de 3 % en masse ou plus et de 60 % en masse ou moins par rapport à la quantité totale du second polymère ; et
un rapport (second polymère/premier polymère) de la masse du second polymère à la masse du premier polymère est de 4 ou plus et de 250 ou moins.

2. Ingrédient pour un matériau de revêtement de séparateur de cellule secondaire selon la revendication 1, dans lequel une taille ($D_{50}$) de particule moyenne en volume de la particule de noyau-enveloppe est de 0,4 μm ou plus et de 2,0 μm ou moins.

3. Matériau de revêtement de séparateur de cellule secondaire comprenant :
l'ingrédient pour un matériau de revêtement de séparateur de cellule secondaire selon la revendication 1.

4. Matériau de revêtement de séparateur de cellule secondaire selon la revendication 3 comprenant en outre :
une charge inorganique et un dispersant.

5. Séparateur de cellule secondaire comprenant :

un film poreux et
un film de revêtement du matériau de revêtement de séparateur de cellule secondaire selon la revendication 3 disposé sur au moins une surface du film poreux.

**6.** Procédé de production d'un séparateur de cellule secondaire comprenant :

une étape de préparation d'un film poreux et
une étape de revêtement du matériau de revêtement de séparateur de cellule secondaire selon la revendication 3 sur au moins une surface du film poreux.

**7.** Cellule secondaire comprenant :
une électrode positive, une électrode négative et le séparateur de cellule secondaire selon la revendication 5 disposé entre l'électrode positive et l'électrode négative.

**EP 4 137 307 B1**

## REFERENCES CITED IN THE DESCRIPTION

**Patent documents cited in the description**

- US 2016141581 A1
- WO 2017026095 A